# EUROPEAN PATENT SPECIFICATION

(11) **EP 3 379 331 B1**
(45) Date of publication and mention of the grant of the patent: **14.10.2020**
(21) Application number: 17161818.4
(22) Date of filing: 20.03.2017
(51) Int. Cl.: G03B 17/02

(54) **AN IMAGING SYSTEM FOR A MOTOR VEHICLE**
BILDGEBUNGSSYSTEM FÜR EIN KRAFTFAHRZEUG
SYSTÈME D'IMAGERIE POUR VÉHICULE À MOTEUR

(43) Date of publication of application: 26.09.2018
(73) Proprietor: Veoneer Sweden AB, 447 83 Vårgårda (SE)
(72) Inventor: Fredriksson, Peter, 58422 Linköping (SE); Rundqvist, Niklas, 613 37 Oxelösund (SE); Persson, Madeleine, 58236 Linköping (SE); Wigren, Roger, 58337 Linköping (SE); Törnqvist, Filip, 59732 Åtvidaberg (SE); Knutsson, Per, 58331 Linköping (SE)
(74) Representative: Müller Verweyen

(56) References cited:
- EP-A1- 2 942 939
- WO-A1-2015/032512
- DE-A1-102012 210 818
- US-A1- 2006 291 068
- US-A1- 2007 264 002
- US-A1- 2015 002 737

## Description

The invention relates to an imaging system for a motor vehicle comprising the features of claim 1.

An imaging system for a motor vehicle comprising the features of the preamble of claim 1 is known for example from the EP 2 942 939 A1.

The imaging system comprises a camera housing part and at least one camera module to be mounted to said camera housing part, wherein the camera module comprises a lens objective, a lens holder holding said lens objective, an image sensor and a back plate holding said image sensor.

The camera is attached by rotation locking means. The rotation locking means cooperate with each other to realize predefined orientation and alignment of the camera module and may comprise bores and corresponding pins. Therefore, it is prevented that the camera module may change its position or orientation with respect to a roll angle after the attachment at the camera housing part and after the attachment of the imaging system at a vehicle.

The attachment of the camera module in the camera housing part is realized by several assembly steps. First of all, the camera module needs to be arranged in a predefined position considering the final alignment and orientation. In the next step, the camera module is fixed to the housing part via said pins engaging said bores in a predefined roll angle. Nevertheless, the position may vary from the predefined position by, for example, different mounting forces or tolerances of the bores and pins. This may eventually lead to tilting of the camera module.

Another conventional imaging system is disclosed in US 2015/0002737 A1.

With respect to this prior art it is the object of this invention to provide an imaging system in which the attachment of the camera module in the camera housing part is further facilitated and which enables an improved accuracy of the attachment and orientation of the camera module with respect to a predefined mounting position and orientation, concurrently reducing parts and steps for fixing the camera module and reducing forces applied to the camera module while mounting. According to the invention, an imaging system is suggested comprising the features of claim 1, while further preferred embodiments are contained in the dependent claims.

According to the basic idea of the invention it is suggested that the camera module is provided with several radially outwardly directed protrusions and a closed retainer ring, wherein the retainer ring is provided with several radially inwardly directed protrusions, and the retainer ring is attached by rotating it around a central length axis (A) of the camera module to an attachment position, wherein the camera module is attached at the attachment wall of the camera housing part by being clamped to the attachment wall of the camera housing part when the retainer ring is in the attachment position.

The suggested imaging system comprises several advantages. First of all, there is only one part, the retainer ring, needed for the attachment. The assembly may be further facilitated to only two steps, inserting of the camera module into the opening of the camera housing and the retainer ring and rotating the retainer ring to the attachment position. In the attachment position the retainer ring is arranged between the outwardly directed protrusions of the camera module and the attachment wall. In the attachment position the inwardly directed protrusions of the retainer ring engage the protrusions of the camera module and the retainer ring is therefore fixed against movement. Furthermore, the solution enables an attachment in a single opening without additional bores or the like with equal distributed clamping forces between the retainer ring and the attachment wall of the camera housing part. Therefore, the maximum load of the camera module and the camera housing in the areas of the attachment may be reduced, which results also in a reduced influence of the attachment forces to the final orientation of the camera module in the attachment position. Therefore, the invention enables an attachment of the camera module with a higher accuracy with respect to a predetermined attachment position and orientation.

Furthermore, in the attachment position, the protrusions of the camera module may be in contact with the protrusions of the retainer ring and interacting with them. The advantage of this embodiment is that the protrusions may be adapted to each other in a way to stabilize the position of the camera module when engaging each other in the attachment position, e.g. by parallel surfaces engaging each other to provide a constant contact surface and therefore equally distributing forces while the retainer ring is in the attachment position.

Furthermore, the protrusions of the retainer ring may extend in circumferential direction of the retainer ring in a first angle (α), which is less than 360 degrees related to the central length axis of the camera module, providing a gap between adjacently arranged protrusions of the retainer ring with a second angle (β), and a protrusion of the camera module is extending in circumferential direction of the camera module in a third angle (α'), which is less than 360 degrees related to the central length axis of the camera module, providing a gap between adjacently arranged protrusions of the camera module with a fourth angle (β'), and the gaps are adapted to the protrusions in a way that the first angles (α) are smaller than the fourth angles (β'), and the third angles (α') are smaller than the second angles (β). The advantage of this embodiment is that the gaps between the protrusions of the retainer ring and the gaps between the protrusions of the camera module extend wider in a circumferential direction than the protrusions of the other part and therefore allow the camera to be inserted into the retainer ring, or pushing the retainer ring over the camera module in a force- and contact-free manner. The protrusions of the one part may slip through the gaps of the other part. There is no load adapted to the camera module during this step of attachment. The clamping forces are eventually acting after rotating the retainer ring when the protrusions engage each other in the attachment position.

Furthermore, it is preferred that the camera module may comprise three protrusions which are arranged in angles of 120 degrees with respect to each other related to the length axis of the camera module, which enables an equal distribution of the acting clamping forces in the retainer ring and the attachment wall. This effect is further facilitated by also providing the retainer ring with three protrusions which are arranged in angles of 120 degrees with respect to each other related to the length axis. Therefore, each protrusion of the camera module is assigned to one corresponding protrusion of the retainer ring.

According to a further preferred embodiment it is suggested that the camera module comprises a cylindrical shape, and the retainer ring comprises a circular ring shape. The retainer ring is therefore loaded by an equally distributed load when attached at the camera housing and the assembly further facilitated since the retainer ring may be attached independent from one predefined circumferential orientation.

Furthermore it is preferred that the retainer ring comprises a first rigid element providing the protrusions and a first flexible element, wherein the first flexible element is arranged facing towards the housing part when the retainer ring is in the attachment position. The advantage of this embodiment is that a rigid ring element including rigid protrusions allows for exact positioning of the retainer ring when the protrusions of the retainer ring and the protrusions of the camera module engage each other in the attachment position and consumes tolerance faults in the assembly. A first flexible element may be provided in ring shape and may be designed either by the choice of a special material and/or a special geometry in an elastically deformable manner. Attachment may be performed by pushing the retainer ring against the camera housing part and compressing the flexible element, then rotating the retainer ring until the protrusions of the retainer ring are positioned behind the protrusions of the camera module, and finally releasing the retainer ring. The camera module is then locked in position since the flexible element secures the camera module by pushing it outwards, away from the housing part providing clamping forces. Additionally, the flexible element accounts for soft attachment and sealing at the attachment wall. According to the invention the rigid material is not to be understood as not being elastically deformable at all. In fact, this would be disadvantageous since the forces applied to the retainer ring during the attachment process may cause cracking of the rigid material. On the other hand, the flexible material is to be understood according to the invention as highly flexible and elastically deformable with much less effort compared to the rigid material, since the flexible ring element must allow for compressing and releasing during the attachment process, while the rigid ring element must allow for position-fixed engagement of the protrusions. The flexible material may therefore be a rubber-like material.

It is furthermore preferred that the retainer ring comprises a second rigid element, wherein the first flexible element is arranged between the first rigid element and the second rigid element, and the second rigid element is facing towards the attachment wall of the camera housing part when the retainer ring is in the attachment position. The reason is that a rigid element, maybe designed by choice of a special material like hard plastic, will move with less friction during rotation of the retainer ring to the attachment position.

Furthermore, it is preferred that the first rigid element and the second rigid element are connected by connection elements. The advantage is that the connection elements prevent twisting of the two rigid elements related to each other. Furthermore, this embodiment allows for production as an integral part, e.g. by injection molding. The flexible element may be molded in a second step in the area of the connection elements. Furthermore, it is preferred that the connection elements are elastically deformable since they must imitate the compression and release movement of the flexible element when pushing the retainer ring to the attachment wall and rotating it to the attachment position. Therefore, the connection elements may be designed by a special geometry, e.g. as thin legs with weakened sections in an elastically deformable manner. But any design that allows for compression and release movement of the flexible element may be used.

In the following the invention shall be illustrated on the basis of preferred embodiments with reference to the accompanying drawings, wherein:
- Fig. 1: shows a camera module;
- Fig. 2A to 2C: shows an imaging system with a camera housing part, a retainer ring and a camera module during attachment;
- Fig. 3: shows an imaging system in the attachment position as a cut view;
- Fig. 4: shows an embodiment of a retainer ring with an additional rigid element and connection elements.

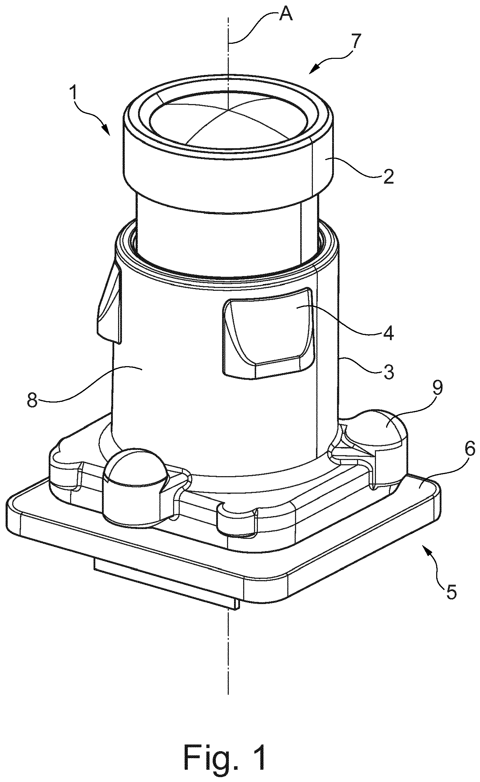

Fig. 1 shows a camera module 1 as a preassembled module comprising as basic components a lens objective 2, a lens holder 3 holding said lens objective 2 and a printed circuit board 6 fixed at the lens holder 3. The lens objective 2 may be screwed into the lens holder 3 and may comprise itself a stack of several single lenses. The printed circuit board 6 may comprise a not shown image sensor which is positioned in a predefined position in relation to the lens objective 2 at the back end 5 of the camera module 1, so that the light entering through the lenses of the lens objective 2 from the front end 7 of the camera module 1 hits onto the image sensor from a predefined direction. The lens holder 3 can be seen as a central part of the camera module 1 as it serves to fix the lens objective 2 and also the printed circuit board 6, so both parts are aligned in relation to each other because of the fixation at a common part. The lens holder 3 is designed with a cylindrical tube body 8. Furthermore, the lens holder 3 is provided with protrusions 4, which are designed with a conical surface having an increasing thickness in the direction towards the back end 5 of the camera module 1. Furthermore, centering surfaces 9 may be provided at the back end part 5 of the camera module 1. The lens holder 3 is designed as a cylindrical tube body 8 provided with three protrusions 4 extending circularly in a circumferential direction of the tube body 8. Therefore, the protrusions 4 have an increasing thickness in the direction of the back end 5 of the camera module 1. Other embodiments of the protrusions 4 of the camera module may be possible as long they allow to rotate the retainer ring 10 to be rotated to the attachment position and allow for engaging the protrusions 11 of the retainer ring 10.

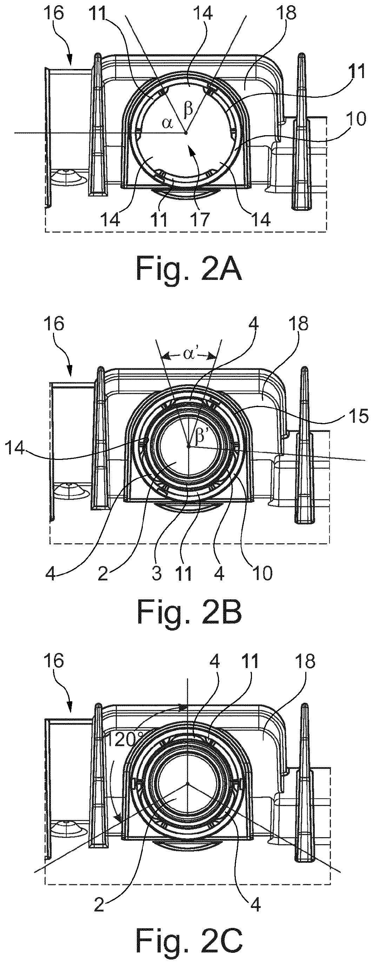

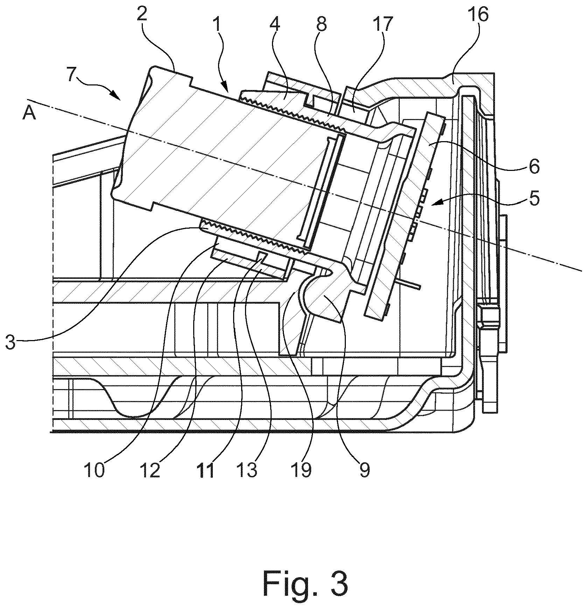

The retainer ring 10 is shown in Figs. 2A to 2C and Fig. 3 presenting an embodiment comprising a first rigid ring element 12 made from a rigid material and a second flexible ring element 13 made from a soft material and inwardly directed protrusions 11 extending with a first angle α in a circumferential direction and gaps 14 between adjacently arranged protrusions 11 which extend in a second angle β. The protrusions 11 are an integral part of the first rigid ring element 12. The second ring element 13 is made of a soft material. A rubber-like soft plastic (polymer, elastomer or rubber material) can be used for this element as it allows for elastic deformation when the retainer ring 10 is pushed against the attachment wall 18 to allow for rotation. When the retainer ring 10 is pushed onto the attachment wall 18 and rotated to the attachment position, the protrusions 11 of the retainer ring 10 are in contact with the protrusions 4 of the camera module 1 and are loaded with clamping forces.

Figs. 2B to 2C and Fig. 3 show the imaging system with a camera housing part 16 and the camera module 1 attached thereto. The camera module 1 is arranged in an opening 17 of the attachment wall 18 and fixed by a retainer ring 10 like described in the following. The camera module 1 is inserted with the lens objective 2 in a first step from the back side of the mounting surface 18 into the opening 17 of the camera module 1 and the retainer ring 10. The retainer ring 10 comprises a first rigid element 12 and radially inwardly directed protrusions 11 which are arranged in angles of 120 degrees with respect to each other related to a length axis A of the camera module 1. The protrusions 11 of the retainer ring 10 extend in a circumferential direction in a first angle α providing gaps 14 extending in a circumferential direction in a second angle β. Accordingly, the protrusions 4 of the camera module 1 are arranged in angles of 120 degrees with respect to each other related to a length axis A of the camera module 1 and extend in a circumferential direction in a third angle α' providing gaps 15 extending in a circumferential direction in a fourth angle β'. The angles are adapted in a way that the first angles α are smaller than the fourth angles β', and the third angles α' are smaller than the second angles β. Consequently, protrusions 4 of the camera module 1 fit through gaps 14 of the retainer ring 10, and protrusions 11 of the retainer ring 10 fit through gaps 15 of the camera module 1 as indicated in Fig. 2B. This allows for a force- and contact-free throughput of the camera module. In the attachment position, which is indicated in Fig. 2C, the protrusions 11 of the retainer ring 10 are positioned behind the back surface of the protrusions 4 of the camera module 1. The thickness of the retainer ring 10 or of the protrusions 11 in the direction of the length axis A is designed so that the thickness of the protrusions 11 of the retainer ring 10 including the thickness of the flexible second ring element 13 is approximately identical or slightly greater than the distance between the attachment wall 18 of the camera housing part 16 and the back surface of the protrusions 4 of the camera module 1 facing towards the attachment wall 18 like shown in Fig. 3. Therefore, the second ring element 13 is loaded by a pressure when the camera module 1 is fixed in the attachment position by the retainer ring 10 to tighten and seal the opening 17 of the camera housing part 16. The protrusions 4 of the camera module 1 are designed with conical surface with in axial direction towards the camera housing part 16 increasing thickness. Other geometries may also be possible.

To avoid changes in the roll angle of the camera objective 2, centering surfaces 9 may be provided, so that the camera module 1 may dive with the centering surfaces 9 into recesses 19 provided at the camera housing part 16, to a predetermined position in axial as well as in circumferential direction like shown in Figure 3. When the camera module 1 is mounted in the attachment position, the centering surfaces 9 are pressed into the corresponding recesses 19 and the protrusions 4 of the camera module are pressed with their end faces against the protrusions 11 of the retainer ring 10 and the retainer ring 10 finally against the attachment wall 18 of the camera housing part 16, so that the camera module 1 is attached to the camera housing part 16 by clamping.

The mounting process of the camera module 1 is therefore reduced to only two steps, inserting of the camera module 1 into the opening 17 of the retainer ring 10, and rotating the retainer ring 10 to the attachment position. Since the image sensor is arranged in a fixed position with respect to the lens holder 3 and the lens objective 2 is also fixed at the lens holder 3, the lens objective 2 got an orientation and position relating to the image sensor which is independent from the mounting of the camera module 1 at the camera housing part 16.

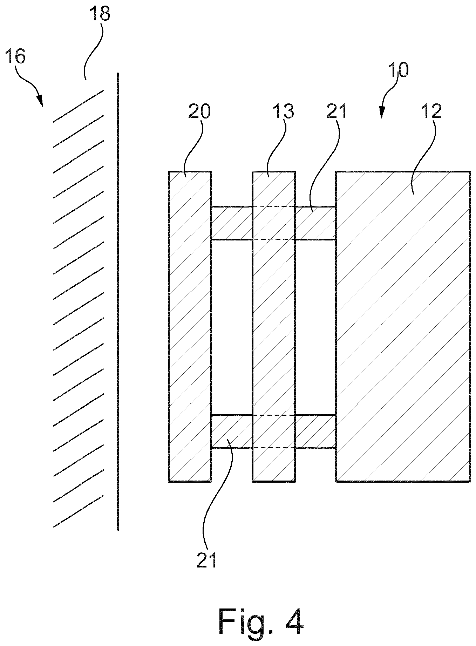

In Fig. 4 an embodiment of the retainer ring 10 is described comprising a first rigid element 12, a first flexible element 13 and a second rigid element 20. The first flexible element 13 is arranged between the first rigid element 12 and the second rigid element 20, and the second rigid element 13 is facing towards the attachment wall 18 of the camera housing part 16 when the retainer ring 10 is in the attachment position. The second rigid element 20 will cause less friction during rotation of the retainer ring 10 to the attachment position. The first rigid element 12 and the second rigid element 20 are connected by connection elements 21. The rigid elements 12, 20 are therefore fixed to each other and the connection elements 21 prevent twisting. Production is also facilitated since the rigid elements 12, 20, including the connection elements 21, may be produced as an integral part, e.g. by injection molding. The flexible element 13 may be molded in a second step in the area of the connection elements 21. The connection elements 21 are designed as thin legs and their length may be adapted to the distance between the outermost surface of the second rigid element 20 facing towards the attachment wall 18 and the first rigid element 12. This distance resembles to the distance between the protrusions 4 of the camera module 1 and the attachment wall 16 in order to establish a clamping. Therefore, the connection elements 21 are elastically deformable since they must imitate the compression and release movement of the flexible element 13 when pushing the retainer ring 10 to the attachment wall 18 and rotating it to the attachment position. Therefore, the connection elements 21 may be provided with e.g. weakened sections in order to adapt the distance in the attachment position.

## Claims

1. An imaging system for a motor vehicle, comprising
- a camera housing part (16) and at least one camera module (1) to be mounted to an attachment wall (18) of said camera housing part (16), **characterized in that**
- the camera module (1) is provided with several radially outwardly directed protrusions (4), and
- a closed retainer ring (10) is provided in the camera housing part, wherein
- the closed retainer ring (10) is provided with several radially inwardly directed protrusions (11), and
- said closed retainer ring (10) is attached to the camera module (1) by rotating it around a central length axis (A) of the camera module (1) to an attachment position, wherein
- the camera module (1) is attached at the attachment wall (18) of the camera housing part (16) by being clamped to the attachment wall (18) when the closed retainer ring (10) is in the attachment position.

2. An imaging system according to claim 1, **characterized in that**,
- in the attachment position, the protrusions (4) of the camera module (1) are in contact and interact with the protrusions (11) of the retainer ring (10).

3. An imaging system according to one of the preceding claims, **characterized in that**
- a protrusion (11) of the closed retainer ring (10) is extending in circumferential direction of the closed retainer ring (10) in a first angle (α) less than 360 degrees related to the central length axis (A), providing a gap (14) between adjacently arranged protrusions (11) of the closed Z retainer ring (10) with a second angle (β), and
- a protrusion (4) of the camera module (1) is extending in circumferential direction of the camera module (1) in a third angle (α') less than 360 degrees related to the central length axis (A), providing a gap (15) between adjacently arranged protrusions (4) of the camera module (1) with a fourth angle (β'), and
- said gaps (14, 15) are adapted to the protrusions (4,11) in a way that
- the first angles (α) are smaller than the fourth angles (β'), and
- the third angles (α') are smaller than the second angles (β).

4. An imaging system according to any of the preceding claims, **characterized in that**
- the camera module (1) comprises three protrusions (4) which are arranged in angles of 120 degrees with respect to each other related to the length axis (A) of the camera module (1).

5. An imaging system according to claim 4, **characterized in that**
- the closed retainer ring (10) comprises three protrusions (11) which are arranged in angles of 120 degrees with respect to each other related to the length axis (A).

6. An imaging system according to any of the preceding claims, **characterized in that**,
- the camera module (1) comprises a cylindrical shape, and
- the closed retainer ring (10) comprises a circular ring shape.

7. An imaging system according to any of the preceding claims, **characterized in that**,
- the closed retainer ring (10) comprises a first rigid element (12) providing the protrusions (11) and a first flexible element (13), wherein
- the first flexible element (13) is arranged facing towards the attachment wall (18) of the camera housing part (16) when the retainer ring (10) is in the attachment position.

8. An imaging system according to claim 7, **characterized in that**,
- the closed retainer ring (10) further comprises a second rigid element (20), wherein
- the first flexible element (13) is arranged between the first rigid element (12) and the second rigid element (20), and
- the second rigid element (20) is facing towards the attachment wall (18) of the camera housing part (16) when the retainer ring (10) is in the attachment position.

9. An imaging system according to claim 8, **characterized in that**,
- the first rigid element (12) and the second rigid element (20) are connected by connection elements (21).

10. An imaging system according to claim 9, **characterized in that**,
- the connection elements (21) are elastically deformable.

## Patentansprüche

1. Ein Bilderzeugungssystem für ein Kraftfahrzeug, wobei das Bilderzeugungssystem umfasst:
- ein Kameragehäuseteil (16) und wenigstens ein Kameramodul (1), das an einer Befestigungswand (18) des Kameragehäuseteils (16) zu montieren ist, **dadurch gekennzeichnet, dass**
- das Kameramodul (1) mit mehreren radial nach außen gerichteten Vorsprüngen (4) versehen ist, und
- in dem Kameragehäuseteil ein geschlossener Haltering (10) vorgesehen ist, wobei
- der geschlossene Haltering (10) mit mehreren radial nach innen gerichteten Vorsprüngen (11) versehen ist, und
- der geschlossene Haltering (10) dadurch an dem Kameramodul (1) befestigt wird, dass er um eine zentrale Längsachse (A) des Kameramoduls (1) in eine Befestigungsstellung gedreht wird, wobei
- das Kameramodul (1) dadurch an der Befestigungswand (18) des Kameragehäuseteils (16) befestigt ist, dass es an die Befestigungswand (18) geklemmt ist, wenn der geschlossene Haltering (10) in der Befestigungsstellung ist.

2. Ein Bilderzeugungssystem nach Anspruch 1, **dadurch gekennzeichnet, dass**
- die Vorsprünge (4) des Kameramoduls (1) in der Befestigungsstellung mit den Vorsprüngen (11) des Halterings (10) in Kontakt sind und zusammenwirken.

3. Ein Bilderzeugungssystem nach einem der vorhergehenden Ansprüche, **dadurch gekennzeichnet, dass**
- ein Vorsprung (11) des geschlossenen Halterings (10) bezogen auf die zentrale Längsachse (A) unter einem ersten Winkel (α) kleiner als 360 Grad in Umfangsrichtung des geschlossenen Halterings (10) verläuft, wobei er zwischen angrenzend angeordneten Vorsprüngen (11) des geschlossenen Halterings (10) einen Zwischenraum (14) mit einem zweiten Winkel (β) bereitstellt, und
- ein Vorsprung (4) des Kameramoduls (1) bezogen auf die zentrale Längsachse (A) unter einem dritten Winkel (α') kleiner als 360 Grad in Umfangsrichtung des Kameramoduls (1) verläuft, wobei er zwischen angrenzend angeordneten Vorsprüngen (4) des Kameramoduls (1) einen Zwischenraum (15) mit einem vierten Winkel (β') bereitstellt, und
- die Zwischenräume (14, 15) in der Weise an die Vorsprünge (4, 11) angepasst sind, dass:
- die ersten Winkel (α) kleiner als die vierten Winkel (β') sind, und
- die dritten Winkel (α') kleiner als die zweiten Winkel (β) sind.

4. Ein Bilderzeugungssystem nach einem der vorhergehenden Ansprüche, **dadurch gekennzeichnet, dass**
- das Kameramodul (1) drei Vorsprünge (4) umfasst, die bezogen auf die Längsachse (A) des Kameramoduls (1) in Bezug zueinander unter Winkeln von 120 Grad angeordnet sind.

5. Ein Bilderzeugungssystem nach Anspruch 4, **dadurch gekennzeichnet, dass**
- der geschlossene Haltering (10) drei Vorsprünge (11) umfasst, die bezogen auf die Längsachse (A) in Bezug zueinander unter Winkeln von 120 Grad angeordnet sind.

6. Ein Bilderzeugungssystem nach einem der vorhergehenden Ansprüche, **dadurch gekennzeichnet, dass**
- das Kameramodul (1) eine Zylinderform umfasst, und
- der geschlossene Haltering (10) eine Kreisringform umfasst.

7. Ein Bilderzeugungssystem nach einem der vorhergehenden Ansprüche, **dadurch gekennzeichnet, dass**
- der geschlossene Haltering (10) ein erstes starres Element (12), das die Vorsprünge (11) bereitstellt, und ein erstes biegsames Element (13) umfasst, wobei
- das erste biegsame Element (13) der Befestigungswand (18) des Kameragehäuseteils (16) zugewandt angeordnet ist, wenn der Haltering (10) in der Befestigungsstellung ist.

8. Ein Bilderzeugungssystem nach Anspruch 7, **dadurch gekennzeichnet, dass**
- der geschlossene Haltering (10) ferner ein zweites starres Element (20) umfasst, wobei
- das erste biegsame Element (13) zwischen dem ersten starren Element (12) und dem zweiten starren Element (20) angeordnet ist, und
- das zweite starre Element (20) in Richtung der Befestigungswand (18) des Kameragehäuseteils (16) weist, wenn der Haltering (10) in der Befestigungsstellung ist.

9. Ein Bilderzeugungssystem nach Anspruch 8, **dadurch gekennzeichnet, dass**
- das erste starre Element (12) und das zweite starre Element (20) durch Verbindungselemente (21) verbunden sind.

10. Ein Bilderzeugungssystem nach Anspruch 9, **dadurch gekennzeichnet, dass**
- die Verbindungselemente (21) elastisch verformbar sind.

## Revendications

1. Un système d'imagerie pour un véhicule à moteur, comprenant
- une partie de logement de caméra (16) et au moins un module de caméra (1) destiné à être monté sur une paroi de fixation (18) de ladite partie de logement de caméra (16), **caractérisé en ce**
- **que** le module de caméra (1) est pourvu de plusieurs saillies (4) orientées radialement vers l'extérieur, et
- **qu'**une bague de retenue fermée (10) est prévue dans la partie de logement de caméra, dans lequel
- la bague de retenue fermée (10) est pourvue de plusieurs saillies (11) orientées radialement vers l'intérieur, et
- ladite bague de retenue fermée (10) est fixée au module de caméra (1) en la tournant autour d'un axe longitudinal central (A) du module de caméra (1) jusque dans une position de fixation, dans lequel
- le module de caméra (1) est fixé sur la paroi de fixation (18) de la partie de logement de caméra (16) en étant bloqué par serrage sur la paroi de fixation (18) quand la bague de retenue fermée (10) est dans la position de fixation.

2. Un système d'imagerie selon la revendication 1, **caractérisé en ce**
- **que**, dans la position de fixation, les saillies (4) du module de caméra (1) sont en contact et interagissent avec les saillies (11) de la bague de retenue (10).

3. Un système d'imagerie selon l'une des revendications précédentes, **caractérisé en ce**
- **qu'**une saillie (11) de la bague de retenue fermée (10) s'étend dans la direction périphérique de la bague de retenue fermée (10) selon un premier angle (α) inférieur à 360 degrés par rapport à l'axe longitudinal central (A), créant un intervalle (14) d'un deuxième angle (β) entre des saillies (11) disposées de manière adjacente de la bague de retenue fermée (10), et
- **qu'**une saillie (4) du module de caméra (1) s'étend dans la direction périphérique du module de caméra (1) selon un troisième angle (α') inférieur à 360 degrés par rapport à l'axe longitudinal central (A), créant un intervalle (15) d'un quatrième angle (β') entre des saillies (4) disposées de manière adjacente du module de caméra (1), et
- **que** lesdits intervalles (14, 15) sont adaptés aux saillies (4, 11) de telle manière
- **que** les premiers angles (α) sont plus petits que les quatrièmes angles (β'), et
- **que** les troisièmes angles (α') sont plus petits que les deuxièmes angles (β).

4. Un système d'imagerie selon l'une quelconque des revendications précédentes, **caractérisé en ce**
- **que** le module de caméra (1) comprend trois saillies (4) qui sont disposées selon des angles de 120 degrés entre elles par rapport à l'axe longitudinal (A) du module de caméra (1).

5. Un système d'imagerie selon la revendication 4, **caractérisé en ce**
- **que** la bague de retenue fermée (10) comprend trois saillies (11) qui sont disposées selon des angles de 120 degrés entre elles par rapport à l'axe longitudinal (A).

6. Un système d'imagerie selon l'une quelconque des revendications précédentes, **caractérisé en ce**
- **que** le module de caméra (1) comprend une forme cylindrique, et
- **que** la bague de retenue fermée (10) comprend une forme d'anneau circulaire.

7. Un système d'imagerie selon l'une quelconque des revendications précédentes, **caractérisé en ce**
- **que** la bague de retenue fermée (10) comprend un premier élément rigide (12) présentant les saillies (11) et un premier élément flexible (13), dans lequel
- le premier élément flexible (13) est disposé faisant face à la paroi de fixation (18) de la partie de logement de caméra (16) quand la bague de retenue (10) est dans la position de fixation.

8. Un système d'imagerie selon la revendication 7, **caractérisé en ce**
- **que** la bague de retenue fermée (10) comprend en outre un deuxième élément rigide (20), dans lequel
- le premier élément flexible (13) est disposé entre le premier élément rigide (12) et le deuxième élément rigide (20), et
- le deuxième élément rigide (20) fait face à la paroi de fixation (18) de la partie de logement de caméra (16) quand la bague de retenue (10) est dans la position de fixation.

9. Un système d'imagerie selon la revendication 8, **caractérisé en ce**
- **que** le premier élément rigide (12) et le deuxième élément rigide (20) sont reliés par des éléments de connexion (21).

10. Un système d'imagerie selon la revendication 9, **caractérisé en ce**
- **que** les éléments de connexion (21) sont aptes à subir une déformation élastique.
